# EUROPEAN PATENT SPECIFICATION

(11) **EP 4 257 342 B1**
(45) Date of publication and mention of the grant of the patent: **04.09.2024**
(21) Application number: 22187485.2
(22) Date of filing: 28.07.2022
(51) Int. Cl.: B29C 65/06, B29C 65/78, A47K 13/02, B29C 65/00, B29C 65/48, B29L 31/00

(54) **A TOILET SEAT CONNECTION TOOL AND A TOILET SEAT APPLYING SAME**
TOILETTENSITZVERBINDUNGSWERKZEUG UND TOILETTENSITZ DAMIT
OUTIL DE RACCORDEMENT DE SIÈGE DE TOILETTES ET SIÈGE DE TOILETTES L'UTILISANT

(30) Priority: 09.04.2022 CN 202220842578 U
(43) Date of publication of application: 11.10.2023
(73) Proprietor: Geberit International AG, 8645 Jona (CH)
(72) Inventor: Qian, Weian, Shanghai, 201802 (CN); YOU, Hang, Shanghai, 201802 (CN); Yang, Liang, Shanghai, 201802 (CN); YUAN, Yihui, Shanghai, 201802 (CN); YAO, Jun, Shanghai, 201802 (CN)
(74) Representative: König Szynka Tilmann von Renesse Patentanwälte Partnerschaft mbB München

(56) References cited:
- JP-A- 2014 018 283
- JP-A- 2018 082 817
- JP-A- H1 023 992

## Description

### Technical field

The invention relates to a tool and a toilet seat, in particular a toilet seat connection tool and a toilet seat for applying same.

### Background technology

With the more and more extensive application of intelligent toilets, the internal structure of toilet seats is becoming more and more complex. The toilet seat of an intelligent toilet is made of thermoplastic resin and comprises an upper part of the toilet and a toilet seat lining. After injection molding, the internal parts of the seat are installed, and then are fixed on the tool of the connection machine, e. g. a welding machine for welding so as to connect both parts into an integrated part and obtain a product without fitting clearance/gap (i.e. seamless seat). For the above welding, vibration welding is preferred. Vibration welding, also known as friction welding, refers to the method of using the friction heat generated by the friction between thermoplastic plastics to heat and melt the friction surfaces, and then connecting them after pressurizing and cooling. During friction welding, there are still some disadvantages with the tool used to fix the toilet seat. For example, it is necessary to use an adjusting pressure block for restricting the displacement of the toilet seat during welding, and the position of the tool cannot fit the shape of the toilet seat well, thus affecting the effect of vibration welding.

As regards the prior art, reference is made to JP 2018 082817 A relating to the manufacture of a toilet seat by vibration or ultrasonic welding. Further, reference is made to JP 2014 018283 A and JP H10 23992 A.

### Description of the invention

The invention provides a toilet seat connection tool, which solves the problems of low stability for the toilet seat and poor welding effect during friction welding in the prior art.

To this end, the invention provides a toilet seat connection tool, which comprises a first base plate, a first worktable, a first profiling groove, a second base plate, a second worktable and a second profiling groove;
the first worktable is arranged in the middle area of the first base plate, and
the first profiling groove is arranged on the first worktable;
the second worktable is arranged in the middle area of the second base plate, and the second profiling groove is arranged on the second worktable;
the second base plate is inverted on the first base plate, and the position of the second worktable corresponds to that of the first worktable, so that the first profiling groove and the second profiling groove can be fitted up and down;
both sides of the first profiling groove are provided with positioning notches.

Preferably, at least two suckers are evenly distributed in the second profiling groove.

Preferably, at least two first guide posts are symmetrically arranged on both sides of the first base plate, and at least two second guide posts are arranged at the position corresponding to the first guide post on the second base plate; the first guide post and the second guide post are hollow structures, and the sizes of the hollow parts are the same; when the first base plate and the second base plate are fitted up and down, they can be fitted and positioned by inserting the guide shafts into the hollow structure part of the first guide post and the second guide post.

Preferably, at least two lifting mechanisms are arranged in the first profiling groove. The lifting mechanism comprises a driving mechanism and a lifting part. The lifting part is arranged on the driving mechanism. The driving mechanism is arranged in the first worktable, and the lifting parts are evenly distributed in the first profiling groove and can move up and down relative to the position of the first profiling groove.

Preferably, one side of the first base plate is provided with an air circuit box and an electric circuit box.

Preferably, the first profiling groove comprises an arc-shaped part and a straight-line part. The shape of the longitudinal section of the straight-line part is a downward inclined acute angle, with the angle range of the acute angle between 30° and 90°.

Preferably, the part where the first profiling groove and the second profiling groove are fitted adopts a rubber layer, and the hardness of the rubber layer is 85±5 Shore A.

In an embodiment a toilet seat comprises an upper part of the seat, a lower part of the seat and a hook part; the upper part of the seat and the lower part of the seat can be fitted up and down; the two sides of the upper part of the seat are provided with the hook part. The hook part comprises an L shape of a vertical part and a horizontal part, which is bent upward; the vertical part of the hook part can be embedded into the positioning notch of any one of the above-mentioned claims.

The beneficial effect of this scheme is that, by providing a profiling groove on the tool and positioning notches on both sides of the first profiling groove, the erection of the toilet seat is fully stabilized and the connection can be enhanced, in particular the welding effect of for example friction welding can be enhanced.

The invention can be applied to a fixing of the internal seat parts to a tool of any connection technology. Technologies using a flowable connection material are preferred. This may relate to making the material of the parts to be connected flowable such as by welding, in particular vibration welding, but also a dedicated connection material can be applied. In the latter case, a connection material being flowable when applied or also a connection material being made flowable by pressing, vibration or (otherwise) melting or softening can be preferred. Preferred examples are gluing and welding, in particular vibration welding.

### Description of the attached drawings

By reading and referring to the detailed description of the non-restrictive embodiments in the attached drawings, other features, purposes and advantages of the invention will become more distinct:
Figure 1 is the first perspective view of the toilet seat tool in the embodiment;
Figure 2 is the top view of the first base plate in the embodiment;
Figure 3 is the top view of the second base plate in the embodiment;
Figure 4 is the perspective view of the toilet seat in the embodiment;
Figure 5 is the perspective view of the second base plate and the lower part of the seat in the embodiment;
Figure 6 is the perspective view of the toilet seat and the toilet seat tool in the embodiment;
Figure 7 is the plan view of the first profiling groove and the second profiling groove after fitting in the embodiment;
Figure 8 is the schematic diagram of the connection between the positioning notch and the hook part in the embodiment;
Figure 9 is the partial enlarged view of D-D in Figure 2;
Figure 10 is the second perspective view of the toilet seat tool in the embodiment;

Description of reference signs: 1 First base plate; 11 First guide post; 2 First worktable; 3 First profiling groove; 31 Arc-shaped part; 32 Straight-line part; 33 Lifting mechanism; 331 Driving mechanism; 332 Lifting Part; 34 Positioning notch; 4 Second base plate; 41 Second guide post; 5 Second worktable; 6 Second profiling groove; 61 Sucker; 7 Air circuit box; 8 Electric circuit box; 9 Guide shaft; 10 Toilet seat; 101 Upper part of seat; 102 Lower part of seat; 103 Hook part.

### Specific embodiment

The invention is further described in detail below in combination with the attached drawings.

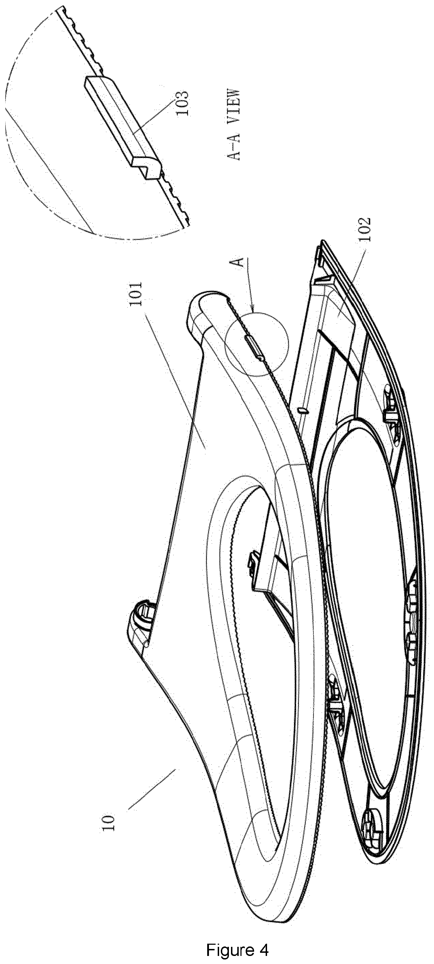

As shown in Figure 4, the toilet seat 10 that can be matched with the welding tool has the following features, including the upper part of the seat 101, the lower part of the seat 102 and the hook part 103. The upper part of the seat fits up and down with the lower part of the seat. The upper part of the seat 101, the lower part of the seat 102 and the hook part 103 are all made of thermoplastic resin and are obtained by injection molding. A hook part 103 is arranged on both sides of the upper part of the seat 101. The hook part 103 is L-shaped and bent upward. One end is connected to the upper part of the seat 101, and the other end is a free one; the hook part can be matched with the positioning notch.

The first base plate 1, the second base plate 4, the sucker 61 and the lifting mechanism 33 mentioned in the invention are controlled by an external machine and driven by it to operate. Any machine and equipment that can provide power can be used to drive the the corresponding parts of the tool for operation. The selection and structure of the machine and equipment will not be repeated in the patent, nor will it be the object to be protected by the invention.

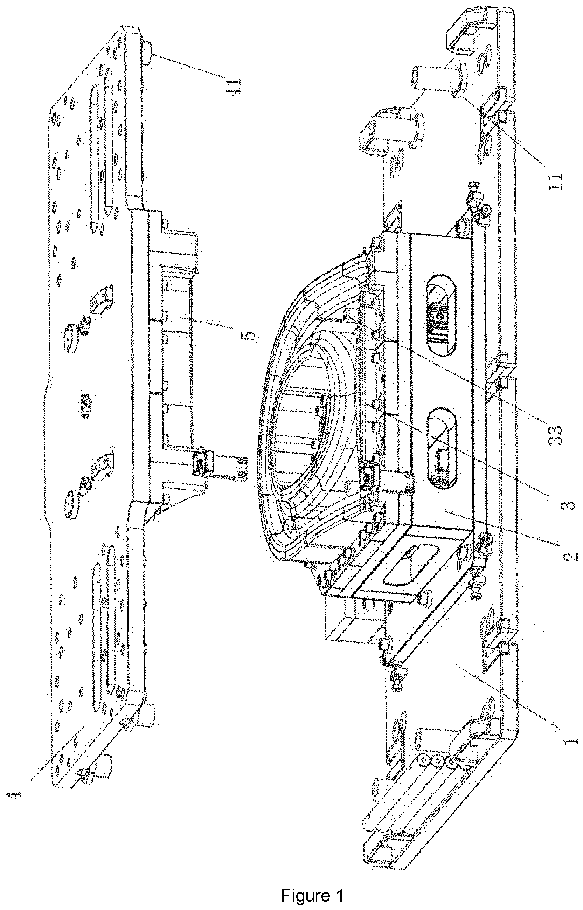

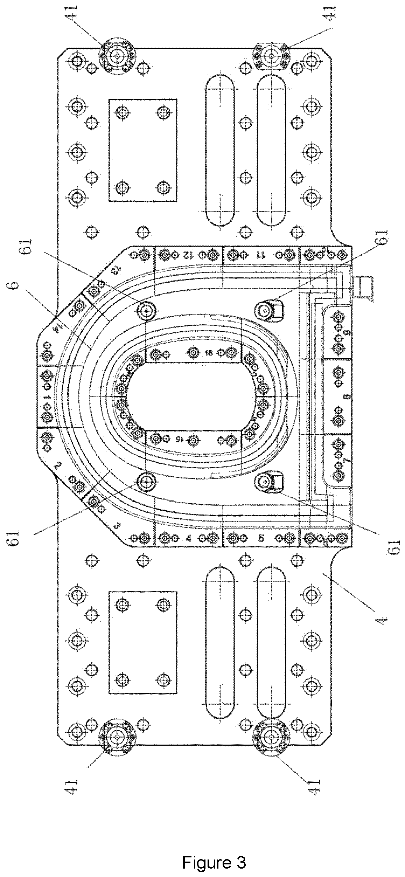

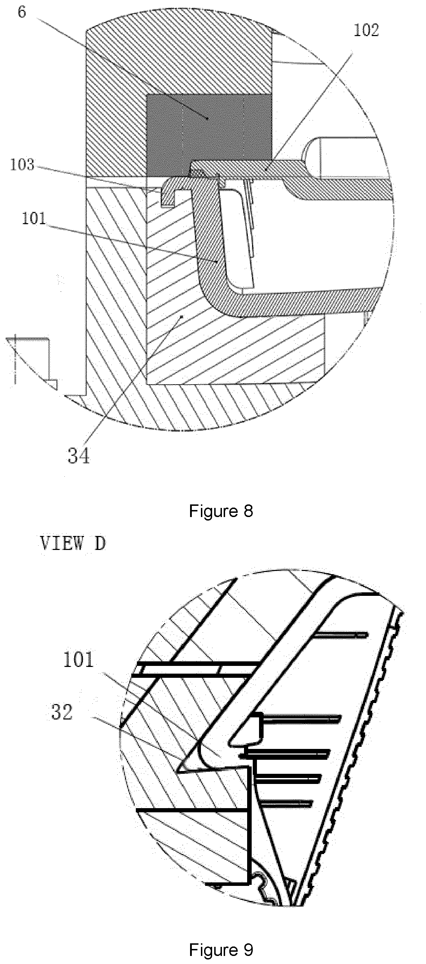

As shown in figure 1-3, the invention provides a toilet seat welding tool which comprises a first base plate 1, a first worktable 2, a first profiling groove 3, a second base plate 4, a second worktable 5 and a second profiling groove 6; the first worktable 2 is arranged in the middle area of the first base plate 1, and the first profiling groove 3 is arranged on the first worktable 2; the second worktable 5 is arranged in the middle area of the second base plate 4, and the second profiling groove 6 is arranged on the second worktable 5; the second base plate 4 is inverted on the first base plate 1, the position of the second worktable 5 corresponds to that of the first worktable 2, which can make the first profiling groove 3 and the second profiling groove 6 fit up and down; as shown in Figure 8, the two sides of the first profiling groove 3 are provided with positioning notches 34. Invert the upper part of the seat 101 to be welded into the first profiling groove 3, with the surface of the upper part of the seat 101 fitting with the surface of the first profiling groove 3 so that the hook parts 103 on both sides of the upper part of the seat 101 are well embedded into the positioning notches 34, and then the lower part of the seat 102 fits above the upper part of the seat 101 by inverting the second base, and the welding edge can fit, so as to facilitate the subsequent friction welding; through the positioning notches on both sides of the first profiling groove 3, the welding position of the toilet seat 10 can be effectively fixed without adding other parts, which is efficient, convenient and lower in cost.

When the first base plate and the second base plate need to be bonded in the way of left-right bonding, the upper part of the seat and the lower part of the seat are vertically placed in the form of left-right bonding, and the toilet seat is fixed in the first profiling groove and the second profiling groove according to the tool structure in this embodiment. In other embodiments, friction welding can still be completed in the way of left-right bonding after reading the way of up-down bonding according to the situation, which is a frequently used technical means readily conceived of by those skilled in the art.

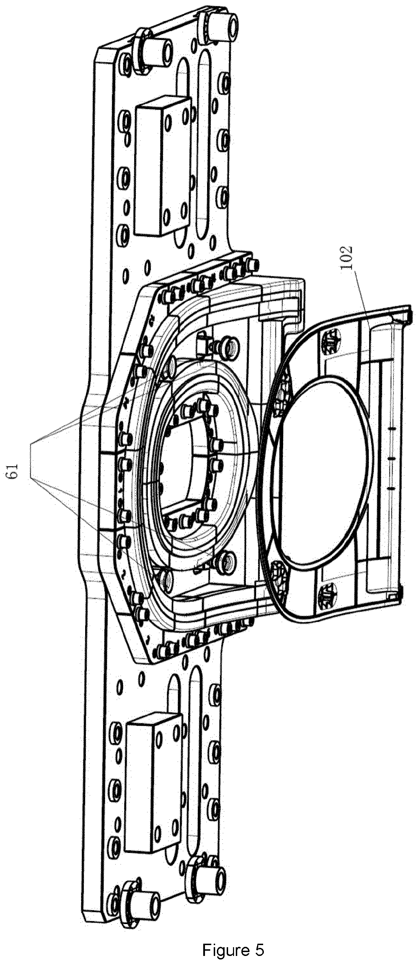

As shown in Figure 5, further, at least two suckers 61 are evenly distributed in the second profiling groove 6. In this embodiment, four suckers 61 evenly distributed up and down are used. Setting of the suckers 61 in the second profiling groove 6 can better absorb the inverted lower part of the seat 102, and will not make the lower part of the seat 102 move freely when suspended and during friction welding, so as to better improve the welding effect.

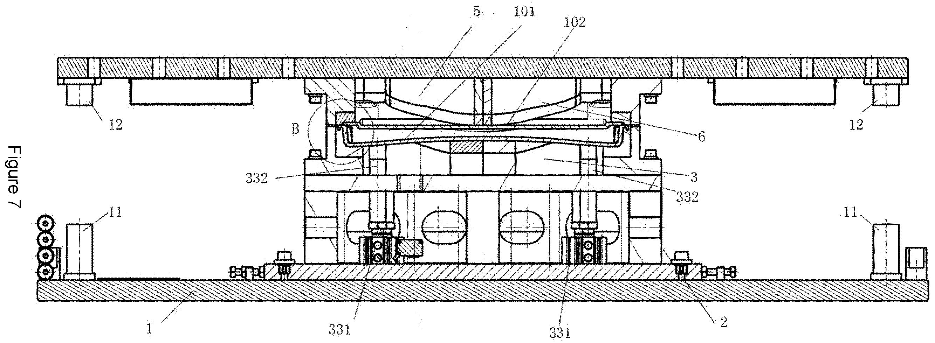

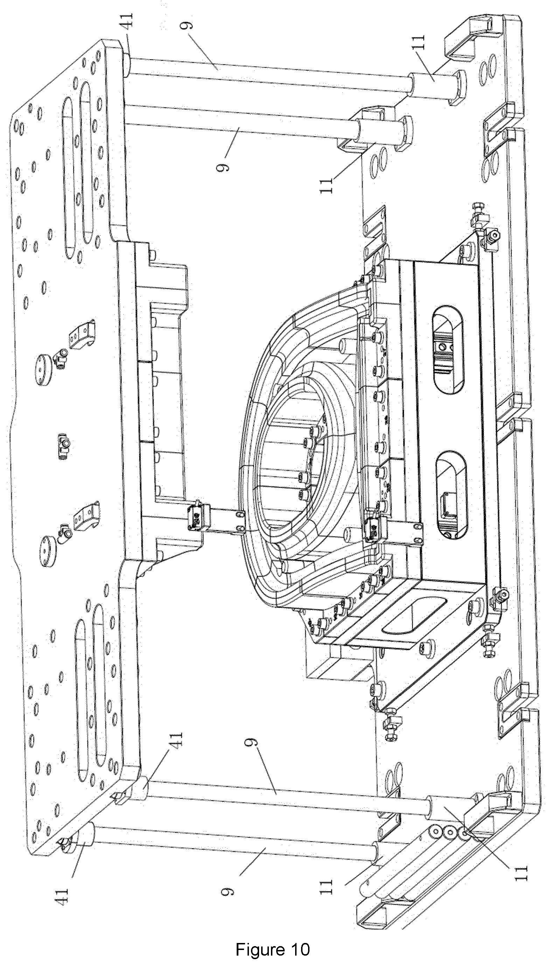

As shown in Figure 7, further, at least two first guide posts are symmetrically arranged on both sides of the first base plate 1, and at least two second guide posts are arranged at the position corresponding to the first guide post on the second base plate 4; the first guide post and the second guide post are hollow structures, and the sizes of the hollow parts are the same; when the first base plate and the second base plate are fitted up and down, they can be fitted and positioned by inserting the guide shafts into the hollow structure part of the first guide post and the second guide post. As shown in Figure 10, in this embodiment, four first guide posts 11 and second guide posts 41 are respectively arranged at the edge of the first base plate 1 and the second base plate 4. Before the seat is welded, the guide shaft 9 can be embedded into the hollow cavity of the first guide post 11. Through the cooperation of the guide shaft and the guide post, the second guide post sleeve is arranged above the guide shaft to position the upper and lower base plates so as to locate the position of the upper and lower profiling grooves; when welding is required, the guide shaft 9 is removed to fit the upper and lower profiling grooves more conveniently.

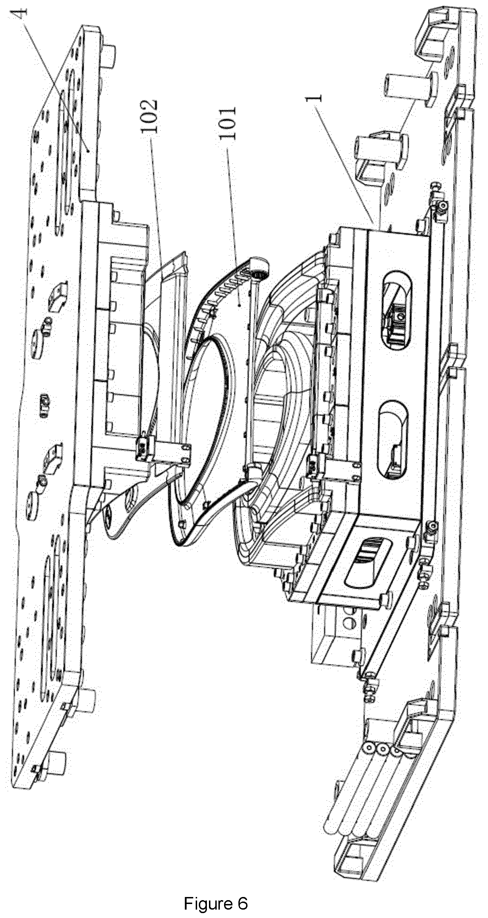

As shown in Figures 1, 6 and 7, further, the first profiling groove 3 is provided with at least two lifting mechanisms 33, which comprises a driving mechanism 331 and a lifting part 332; the lifting part 332 is arranged on the driving mechanism 331 and the driving mechanism 331 is arranged in the first worktable; the lifting parts 332 are evenly distributed in the first profiling groove 3 and can move up and down relative to the position of the first profiling groove 3. In this embodiment, four lifting mechanisms 33 are evenly distributed in the first profiling groove 3. After friction welding is completed, the seat volume will expand slightly due to the heat energy generated by welding, and then form a closer fit with the internal structure of the first profiling groove 3, which is not conducive for the staff to take out the seat; the lifting mechanism 33 can lift the toilet seat 10 a certain distance in the vertical direction from the lower part of the seat, so that it can be smoothly separated from the surface of the first profiling groove 3, which is convenient for the staff to take out the welded toilet seat 10.

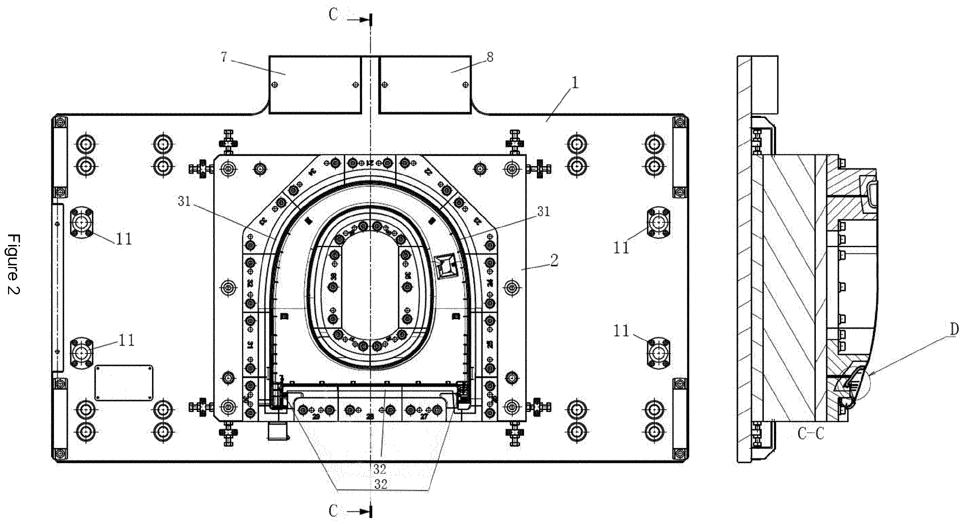

As shown in Figure 2, further, one side of the first base plate 1 is provided with an air circuit box 7 and an electric circuit box 8. An air circuit box 7 and an electric circuit box 8 are arranged on one side, which can better provide driving power required for the operation of the tool.

As shown in Figures 2 and 9, further, the first profiling groove 3 comprises an arc-shaped part 31 and a straight-line part 32. The shape of the longitudinal section of the straight-line part is a downward inclined acute angle, with the angle range of the acute angle between 30° and 90°. In this embodiment, the straight-line part 32 of the first profiling groove 3 corresponds to the shape of the straight-line part in the upper part of the seat 101, and the shape of the straight-line part of the second profiling groove and the lower part of the seat also correspond to each other. The acute angle inclined downward by a certain angle can keep mutual bonding on both sides so that the upper part of the seat 101 is placed in the first profiling groove 3, or the lower part of the seat is placed in the second profiling groove for ensuring more accurate positioning and making the tail gap difference be within the control range. Such a design can better keep the welding position of the toilet seat and achieve better welding effect.

As shown in Figures 1, 6 and 7, further, the part where the first profiling groove 3 and the second profiling groove 6 are bonded adopts a rubber layer, and the hardness of the rubber layer is 85±5 Shore A, which is moderate. Otherwise, if it is too soft, it will cause excessive deformation of the tool; if it is too hard, it will lead to scratch of the product. The first profiling groove 3 and the second profiling groove 6 are divided into a concave area in the middle, with the edge raised upward; the upper and lower parts of the toilet seat 10 can be placed in the concave area between the first profiling groove 3 and the second profiling groove 6, and the upward raised area around can play a role of protection and fitting. The rubber ring is used at the fitting part between the first profiling groove 3 and the second profiling groove 6, which can play a buffer role, prevent the damage of the first profiling groove 3 and the second profiling groove 6, and improve the service life of the tool.

Those skilled in the art, upon considering the instructions and practicing the invention disclosed herein, may readily conceive of other implementation schemes of the invention. The application aims to cover any variation, purpose or adaptive change of the invention, which follows the general principles of the invention and includes the common general knowledge or frequently used technical means in the technical field not disclosed in the disclosure. The instructions and embodiments are only regarded as exemplary, and the real scope of the invention is indicated by the following claims.

It should be understood that the invention is not limited to the precise structure described above and shown in the drawings, and various modifications and alterations can be made without departing from its scope.

## Claims

1. A toilet seat connection tool having a first profiling groove (3) and a second profiling groove (6),
wherein it comprises a first base plate (1), a first work table (2), a second base plate (4), and a second worktable (5);
the first worktable (2) being arranged in the middle area of the first base plate (1), and the first profiling groove (3) being arranged on the first worktable (2);
the second worktable (5) being arranged in the middle area of the second base plate (4), and the second profiling groove (6) being arranged on the second worktable (5);
the second base plate (4) being inverted on the first base plate (1), and the position of the second worktable (5) corresponding to that of the first worktable (2), so that the first profiling groove (3) and the second profiling groove (6) can be fitted up and down;
both sides of the first profiling groove (3) being provided with positioning notches (34).

2. A toilet seat connection tool according to claim 1, **characterized in that** at least two suckers (61) are evenly distributed in the second profiling groove (6).

3. A toilet seat connection tool according to claim 1 or 2, **characterized in that** at least two first guide posts (11) are symmetrically arranged on both sides of the first base plate (1), and at least two second guide posts (41) are arranged at the position corresponding to the first guide post (11) on the second base plate (4); the first guide post (11) and the second guide post (41) being hollow structures, and the sizes of the hollow parts being the same; and **in that**, when the first base plate (1) and the second base plate (4) are fitted up and down, they can be fitted and positioned by inserting the guide shafts (9) into the hollow structure part of the first guide post (11) and the second guide post (41).

4. A toilet seat connection tool according to claim 1, 2 or 3, **characterized in that** at least two lifting mechanisms (33) are arranged in the first profiling groove (3), the lifting mechanism (33) comprising a driving mechanism (331) and a lifting part (332), the lifting part (332) being arranged on the driving mechanism (331), the driving mechanism (331) being arranged in the first worktable (2), wherein the lifting parts (332) are evenly distributed in the first profiling groove (3) and can move up and down relative to the position of the first profiling groove (3).

5. A toilet seat connection tool according to claim 4, **characterized in that** one side of the first base plate (1) is provided with an air circuit box (7) and an electric circuit box (8).

6. A toilet seat connection tool according to one of the preceding claims, **characterized in that** the first profiling groove (3) comprises an arc-shaped part (31) and a straight-line part (32), the shape of the longitudinal section of the straight-line part being (32) a downward inclined acute angle, with the angle range of the acute angle between 30° and 90°.

7. A toilet seat connection tool according to one of the preceding claims, **characterized in that** the part where the first profiling groove (3) and the second profiling groove (6) are fitted adopts a rubber layer, and the hardness of the rubber layer is 85±5 Shore A.

8. A toilet seat connection tool according to one of the preceding claims being a toilet seat welding tool, in particular a toilet seat vibration welding tool.

9. A toilet seat (10) having an upper part of the seat (101) and a lower part of the seat (102),
**characterized in that** it comprises, a hook part (103); that the upper part of the seat (101) and the lower part of the seat (102) can be fitted up and down; and that the two sides of the upper part of the seat (101) are provided with the hook part (103), the hook part (103) comprising an L shape of vertical part and horizontal part, which is bent upward; wherein the vertical part of the hook part (103) can be embedded into one of the positioning notches (34) of a toilet seat connection tool of any one of claims 1 to 8.

10. A toilet seat (10) according to claim 9, **characterized in that** parts of the toilet seat (10) are welded with each other.

## Patentansprüche

1. Toilettensitzverbindungswerkzeug mit einer ersten Profilnut (3) und einer zweiten Profilnut (6),
welches Werkzeug eine erste Grundplatte (1), einen ersten Arbeitstisch (2), eine zweite Grundplatte (4) und einen zweiten Arbeitstisch (5) umfasst;
wobei der erste Arbeitstisch (2) im mittleren Bereich der ersten Grundplatte (1) angeordnet ist und die erste Profilnut (3) an dem ersten Arbeitstisch (2) angeordnet ist;
der zweite Arbeitstisch (5) im mittleren Bereich der zweiten Grundplatte (4) angeordnet ist und die zweite Profilnut (6) an dem zweiten Arbeitstisch (5) angeordnet ist;
wobei die zweite Grundplatte (4) über der ersten Grundplatte (1) invertiert angeordnet ist und die Position des zweiten Arbeitstisches (5) der des ersten Arbeitstisches (2) entspricht, so dass die erste Profilnut (3) und die zweite Profilnut (6) nach oben und unten in Passung gebracht werden können;
beide Seiten der ersten Profilnut (3) mit Positionierkerben (34) versehen sind.

2. Toilettensitzverbindungswerkzeug nach Anspruch 1, **dadurch gekennzeichnet, dass** mindestens zwei Saugeinrichtungen (61) gleichmäßig in der zweiten Profilnut (6) verteilt sind.

3. Toilettensitzverbindungswerkzeug nach Anspruch 1 oder 2, **dadurch gekennzeichnet, dass** mindestens zwei erste Führungspfosten (11) symmetrisch auf beiden Seiten der ersten Grundplatte (1) angeordnet sind und mindestens zwei zweite Führungspfosten (41) an der dem ersten Führungspfosten (11) entsprechenden Position auf der zweiten Grundplatte (4) angeordnet sind; der erste Führungspfosten (11) und der zweite Führungspfosten (41) hohle Strukturen sind und die Größen der hohlen Teile gleich sind; und dass, wenn die erste Grundplatte (1) und die zweite Grundplatte (4) nach oben und unten in Passung gebracht werden, sie durch Einsetzen der Führungsstäbe (9) in den hohlen Strukturteil des ersten Führungspfostens (11) und des zweiten Führungspfostens (41) eingepasst und positioniert werden können.

4. Toilettensitzverbindungswerkzeug nach Anspruch 1, 2 oder 3, **dadurch gekennzeichnet, dass** in der ersten Profilnut (3) mindestens zwei Hubmechanismen (33) angeordnet sind, wobei der Hubmechanismus (33) einen Antriebsmechanismus (331) und ein Hebeteil (332) umfasst, wobei das Hebeteil (332) am Antriebsmechanismus (331) angeordnet ist, wobei der Antriebsmechanismus (331) im ersten Arbeitstisch (2) angeordnet ist, wobei die Hebeteile (332) gleichmäßig in der ersten Profilnut (3) verteilt sind und sich relativ zur Position der ersten Profilnut (3) auf und ab bewegen können.

5. Toilettensitzverbindungswerkzeug nach Anspruch 4, **dadurch gekennzeichnet, dass** eine Seite der ersten Grundplatte (1) mit einem Luftschaltkasten (7) und einem Elektroschaltkasten (8) versehen ist.

6. Toilettensitzverbindungswerkzeug nach einem der vorhergehenden Ansprüche, **dadurch gekennzeichnet, dass** die erste Profilnut (3) einen bogenförmigen Teil (31) und einen geradlinigen Teil (32) umfasst, wobei die Form des Längsschnitts des geradlinigen Teils (32) ein nach unten geneigter spitzer Winkel ist, wobei der Winkelbereich des spitzen Winkels zwischen 30° und 90° liegt.

7. Toilettensitzverbindungswerkzeug nach einem der vorhergehenden Ansprüche, **dadurch gekennzeichnet, dass** der Teil, an dem die erste Profilnut (3) und die zweite Profilnut (6) angebracht sind, eine Gummischicht aufweist und die Härte der Gummischicht 85±5 Shore A beträgt.

8. Toilettensitzverbindungswerkzeug nach einem der vorhergehenden Ansprüche, das ein Toilettensitzschweißwerkzeug, insbesondere ein Toilettensitzvibrationsschweißwerkzeug ist.

9. Toilettensitz (10) mit einem oberen Sitzteil (101) und einem unteren Sitzteil (102),
**dadurch gekennzeichnet, dass** er ein Hakenteil (103) umfasst; dass der obere Sitzteil (101) und der untere Sitzteil (102) nach oben und unten in Passung gebracht werden können; und dass die beiden Seiten des oberen Sitzteils (101) mit dem Hakenteil (103) versehen sind, wobei der Hakenteil (103) eine L-Form aus einem vertikalen Teil und einem horizontalen Teil umfasst, und zwar nach oben gebogen; wobei der vertikale Teil des Hakenteils (103) in eine der Positionierkerben (34) eines Toilettensitzverbindungswerkzeugs nach einem der Ansprüche 1 bis 8 eingebettet werden kann.

10. Toilettensitz (10) nach Anspruch 9, **dadurch gekennzeichnet, dass** Teile des Toilettensitzes (10) miteinander verschweißt sind.

## Revendications

1. Outil d'assemblage de siège de toilettes comportant une première rainure de profilage (3) et une deuxième rainure de profilage (6), et comprenant une première plaque de base (1), une première table de travail (2), une deuxième plaque de base (4) et une deuxième table de travail (5) ;
la première table de travail (2) étant agencée dans la zone médiane de la première plaque de base (1), et la première rainure de profilage (3) étant agencée sur la première table de travail (2) ;
la deuxième table de travail (5) étant agencée dans la zone médiane de la deuxième plaque de base (4), et la deuxième rainure de profilage (6) étant agencée sur la deuxième table de travail (5) ;
la deuxième plaque de base (4) étant inversée sur la première plaque de base (1), et la position de la deuxième table de travail (5) correspondant à celle de la première table de travail (2), de telle façon que la première rainure de profilage (3) et la deuxième rainure de profilage (6) peuvent être ajustées vers le haut et vers le bas ;
les deux côtés de la première rainure de profilage (3) étant pourvus d'encoches de positionnement (34).

2. Outil d'assemblage de siège de toilettes selon la revendication 1, **caractérisé en ce qu'**au moins deux ventouses (61) sont réparties uniformément dans la deuxième rainure de profilage (6).

3. Outil d'assemblage de siège de toilettes selon la revendication 1 ou 2, **caractérisé en ce qu'**au moins deux premiers montants de guidage (11) sont agencés symétriquement de part et d'autre de la première plaque de base (1), et au moins deux deuxièmes montants de guidage (41) sont agencés à la position correspondant au premier montant de guidage (11) sur la deuxième plaque de base (4) ; le premier montant de guidage (11) et le deuxième montant de guidage (41) étant des structures creuses, et les parties creuses étant de même taille ; et **en ce que**, lorsque la première plaque de base (1) et la deuxième plaque de base (4) sont ajustées vers le haut et vers le bas, elles peuvent être ajustées et positionnées par insertion des arbres de guidage (9) dans la partie de structure creuse du premier montant de guidage (11) et du deuxième montant de guidage (41).

4. Outil d'assemblage de siège de toilettes selon la revendication 1, 2 ou 3, **caractérisé en ce qu'**au moins deux mécanismes de levage (33) sont agencés dans la première rainure de profilage (3), le mécanisme de levage (33) comprenant un mécanisme d'entraînement (331) et une pièce de levage (332), la pièce de levage (332) étant agencée sur le mécanisme d'entraînement (331), le mécanisme d'entraînement (331) étant agencé dans la première table de travail (2), les pièces de levage (332) étant réparties uniformément dans la première rainure de profilage (3) et pouvant monter et descendre par rapport à la position de la première rainure de profilage (3).

5. Outil d'assemblage de siège de toilettes selon la revendication 4, **caractérisé en ce qu'**un côté de la première plaque de base (1) est pourvu d'un boîtier de circuit d'air (7) et d'un boîtier de circuit électrique (8).

6. Outil d'assemblage de siège de toilettes selon l'une des revendications précédentes, **caractérisé en ce que** la première rainure de profilage (3) comprend une partie arquée (31) et une partie droite (32), la forme de la section longitudinale de la partie droite (32) étant un angle aigu incliné vers le bas, la plage angulaire de l'angle aigu étant comprise entre 30° et 90°.

7. Outil d'assemblage de siège de toilettes selon l'une des revendications précédentes, **caractérisé en ce que** la partie où sont ajustées la première rainure de profilage (3) et la deuxième rainure de profilage (6) adopte une couche de caoutchouc, et la dureté de la couche de caoutchouc est de 85 ± 5 Shore A.

8. Outil d'assemblage de siège de toilettes selon l'une des revendications précédentes, consistant en un outil de soudage de siège de toilettes, notamment un outil de soudage de siège de toilettes par friction vibratoire.

9. Siège de toilettes (10) présentant une partie supérieure de siège (101) et une partie inférieure de siège (102),
**caractérisé en ce qu'**il comprend une partie crochetée (103) ; **en ce que** la partie supérieure de siège (101) et la partie inférieure de siège (102) peuvent être ajustées vers le haut et vers le bas ; et **en ce que** les deux côtés de la partie supérieure de siège (101) sont pourvus de la partie crochetée (103), la partie crochetée (103) comprenant une forme de L composée d'une partie verticale et d'une partie horizontale et courbée vers le haut ; la partie verticale de ladite partie crochetée (103) pouvant être intégrée dans l'une des encoches de positionnement (34) d'un outil d'assemblage de siège de toilettes selon l'une quelconque des revendications 1 à 8.

10. Siège de toilettes (10) selon la revendication 9, **caractérisé en ce que** des pièces du siège de toilettes (10) sont soudées les unes aux autres.
